(19) Europäisches Patentamt / European Patent Office / Office européen des brevets

(11) **EP 3 766 656 A1**

(12) **EUROPEAN PATENT APPLICATION**
published in accordance with Art. 153(4) EPC

(43) Date of publication:
**20.01.2021 Bulletin 2021/03**

(21) Application number: **19767543.2**

(22) Date of filing: **05.03.2019**

(51) Int Cl.:
**B29C 45/60** (2006.01)    **B29C 45/50** (2006.01)

(86) International application number:
**PCT/JP2019/008629**

(87) International publication number:
**WO 2019/176650 (19.09.2019 Gazette 2019/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.03.2018 JP 2018048309**

(71) Applicant: **JTEKT CORPORATION**
**Chuo-ku,**
**Osaka-shi,**
**Osaka 542-8502 (JP)**

(72) Inventors:
• **BABA, Toshiyuki**
  **Osaka-shi, Osaka 542-8502 (JP)**
• **KIMURA, Koji**
  **Osaka-shi, Osaka 542-8502 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Straße 22**
**85354 Freising (DE)**

(54) **INJECTION MOULDING MACHINE AND RESIN MOULDED ARTICLE PRODUCTION METHOD USING SAME**

(57)    An injection moulding machine capable of making a fiber length of reinforcing fibers contained in a resin moulded article longer than is possible presently to enable production of a resin moulded article that is higher in strength, higher in rigidity, and moreover excellent in wear resistance, fatigue resistance, etc., and a resin moulded article production method using the same are provided. In a fiber kneading stage S2 of a screw 10 in an injection moulding machine 1, a longitudinal cross-sectional area of a space arranged between first flights 12 that feed a base resin 2 and reinforcing fibers in a feeding direction F in conjunction with rotation of the screw while suppressing passage of the base resin and the reinforcing fibers is made greater at an upstream side than at a downstream side in the feeding direction. In a method for producing a resin moulded article 7, an elongated roving 14 containing the reinforcing fibers is continuously supplied as it is in the elongated state to the base resin 2 plasticized inside the cylinder 3 of the injection moulding machine 1 to prepare a fiber-reinforced resin 16 and the prepared fiber-reinforced resin is made to fill a mould internal space of a mould 8.

FIG. 2

EP 3 766 656 A1

## Description

TECHNICAL FIELD

The present invention relates to an injection moulding machine used in production of a resin moulded article constituted of a fiber-reinforced resin and a resin moulded article production method using the same.

BACKGROUND ART

Resin moulded articles are frequently used as structural components, etc., of automobiles for purposes of weight reduction, improvement of quietness, etc., of automobiles. In particular, components with which strength and rigidity are required are generally formed of resin moulded articles constituted of a fiber-reinforced resin having reinforcing fibers such as glass fibers, carbon fibers, aramid fibers, etc., contained in a base resin. As examples of such components, gears, roller components, retainers for bearings, housings for electric power steering apparatuses, housings for electric oil pumps, etc., can be cited.

As the fiber-reinforced resin, for example, a short fiber compound with reinforcing fibers that are short fibers mixed in a base resin and being kneaded under high temperature and high pressure using a kneading disc of a biaxial kneader, etc., is generally used.

However, with demands for smaller size and higher output of automotive equipment in recent years, even higher strength, higher rigidity, improvement of wear resistance, fatigue resistance, etc., are being demanded of the various components mentioned above as well.

In order to accommodate such demands in the case of a resin moulded article constituted of a fiber-reinforced resin, it is known to be effective to make long a fiber length of the reinforcing fibers contained in the resin moulded article. Various examinations are thus being made regarding a resin moulded article production method such as to make long the fiber length of the reinforcing fibers contained in the resin moulded article.

For example, in Patent Document 1, a fiber-reinforced resin prepared by continuously supplying an elongated roving as it is in the elongated state to a base resin in the middle of being fed inside a cylinder of an injection moulding machine is made to fill a mould internal space of a mould connected via a nozzle to a tip portion of the cylinder to produce a resin moulded article.

In detail, first, the base resin is supplied into the cylinder from a resin supplying portion provided at a base end side of the cylinder. The supplied base resin is then heated and plasticized inside the cylinder while being fed in a feeding direction directed toward the tip portion in conjunction with rotation of a screw that is rotatably inserted inside the cylinder.

At the same time, the elongated roving is supplied continuously into the cylinder from a fiber supplying portion provided in an intermediate portion of the cylinder. The supplied roving is then drawn continuously into the cylinder and kneaded continuously with the base resin in conjunction with the feeding of the base resin by the rotation of the screw and the fiber-reinforced resin is thereby prepared.

The mould internal space of the mould connected via the nozzle to the tip portion of the cylinder is then filled with the prepared fiber-reinforced resin and the resin moulded article is thereby produced.

By the above production method, although being cut and shortened by the kneading during injection moulding, the reinforcing fibers contained in the resin moulded article is enabled to be made long in fiber length in comparison to a case of using a short fiber compound.

PRIOR ART DOCUMENTS

PATENT DOCUMENTS

PATENT DOCUMENT 1: Japanese Patent Application Publication No. 2014-166712

SUMMARY OF THE INVENTION

PROBLEMS TO BE SOLVED BY THE INVENTION

However, according to a study by the inventor, with the injection moulding machine used in the production method described in Patent Document 1 [Direct Fiber Feeding Injection Moulding (DFIM); may be referred to hereinafter as the "direct roving method"], examination of the shape of the screw is insufficient. Depending on the shape of the screw, there is a possibility to make the fiber length of the reinforcing fibers contained in the resin moulded article even longer than is possible presently to enable production of a resin moulded article that is even higher in strength, higher in rigidity, and moreover excellent in wear resistance, fatigue resistance, etc., as well.

An object of the present invention is to provide an injection moulding machine capable of making a fiber length of reinforcing fibers contained in a resin moulded article even longer than is possible presently to enable production of a resin moulded article that is higher in strength, higher in rigidity, and moreover excellent in wear resistance, fatigue resistance, etc., and a resin moulded article production method using the same.

MEANS TO SOLVE THE PROBLEM

An invention according to Claim 1 is an injection moulding machine (1) including a cylindrical cylinder (3) that is provided at a base end side with a resin supplying portion (5) supplied with a base resin (2), is provided at a tip portion with a nozzle (6) injecting the base resin that has been plasticized, and has between the resin supplying portion and the tip portion a fiber supplying portion (15) supplied continuously with an elongated roving (14) constituted of reinforcing fibers and a screw (10) that is provided with flights (12) of spiral shape on an outer periphery and is inserted inside the cylinder with a central axis being matched with an axis (X) of the cylinder such as to be rotatable around the axis, and where the screw includes a fiber kneading stage (S2) at which while the base resin is fed in a feeding direction (F) directed toward the tip portion from the base end side in conjunction with the rotation, the roving supplied from the fiber supplying portion is continuously drawn into the cylinder and kneaded with the base resin to prepare a fiber-reinforced resin (16), and the fiber kneading stage is provided with at least first flights (12a) to (12c) as the flights that feed the base resin and the reinforcing fibers in the feeding direction in conjunction with the rotation of the screw while suppressing passage of the base resin and the reinforcing fibers, and in the fiber kneading stage, a longitudinal cross-sectional area A2a (mm$^2$) of a space arranged between the first flights at an upstream side in the feeding direction of the base resin and a longitudinal cross-sectional area A2b (mm$^2$) of a space arranged between the first flights at a downstream side in the feeding direction satisfy formula (I):

$$A2a < A2b \quad (I).$$

It is preferable as in Claim 2 that in the fiber kneading stage (S2), a region (S2a) at the upstream side provided with two or more sets of the first flights (12a) to (12c) is provided at the upstream side in the feeding direction (F) and in a region (S2b) further to the downstream side in the feeding direction than the region at the upstream side, one set of the first flights (12a) among the two or more sets of the first flights is made to remain by omission of the other first flights (12b) and (12c) such that a longitudinal cross-sectional area A2b (mm$^2$) of a space arranged between the first flights of the remaining one set satisfies formula (I) with respect to a longitudinal cross-sectional area A2a (mm$^2$) of a space arranged between the mutually adjacent first flights of two or more sets in the region at the upstream side.

Also, as in Claim 3, in the region (S2b) at the downstream side in the feeding direction (F), one set of the first flights (12a) among the two or more sets of the first flights (12a) to (12c) may be made to remain and second flights (12b') and (12c') that are made greater in clearance (C2) with respect to an inner peripheral surface

(3a) of the cylinder (3) than the first flights of the remaining set (C2 > C1) and allow passage of the base resin (2) and the reinforcing fibers may be provided in place of the other first flights (12b) and (12c) and in continuation to the other first flights such that the longitudinal cross-sectional area A2b (mm$^2$) of the space arranged between the first flights of the remaining one set satisfies formula (I) with respect to the longitudinal cross-sectional area A2a (mm$^2$) of the space arranged between the mutually adjacent first flights of two or more sets in the region at the upstream side.

Further, as in Claim 4, in the region (S2b) at the downstream side in the feeding direction (F), one set of the first flights (12a) among the two or more sets of the first flights (12a) to (12c) may be made to remain and second flights (12b') and (12c') that are provided with notches (21) connecting an upstream side and a downstream side in the feeding direction and allow passage of the base resin (2) and the reinforcing fibers through the notches may be provided in place of the other first flights (12b) and (12c) and in continuation to the other first flights such that the longitudinal cross-sectional area A2b (mm$^2$) of the space arranged between the first flights of the remaining one set satisfies formula (I) with respect to the longitudinal cross-sectional area A2a (mm$^2$) of the space arranged between the mutually adjacent first flights of two or more sets in the region at the upstream side.

Also, as in Claim 5, at the downstream side in the feeding direction (F) of the fiber kneading stage (S2), the region (S2b) at the downstream side that is greater in pitch width (P2b) of the first flights (12) than the region (S2a) at the upstream side in the feeding direction (P2b > P2a) may be provided such that the longitudinal cross-sectional area A2b (mm$^2$) of the space arranged between the first flights in the region at the downstream side satisfies formula (I) with respect to the longitudinal cross-sectional area A2a (mm$^2$) of the space arranged between the first flights in the region at the upstream side.

Further, as in Claim 6, at the downstream side in the feeding direction (F) of the fiber kneading stage (S2), the region (S2b) at the downstream side in which a depth (D2b) in a radial direction of a recessed groove (13) arranged between the first flights (12) is greater than that in the region (S2a) at the upstream side in the feeding direction (D2b > D2a) may be provided such that the longitudinal cross-sectional area A2b (mm$^2$) of the space arranged between the first flights in the region at the downstream side satisfies formula (I) with respect to the longitudinal cross-sectional area A2a (mm$^2$) of the space arranged between the first flights in the region at the upstream side.

An invention according to Claim 7 is a resin moulded article production method that is a method for producing a resin moulded article (7) constituted of a fiber-reinforced resin (16) containing a base resin (2) and reinforcing fibers and includes a step of supplying the base resin from the resin supplying portion (5) to the cylinder (3) of the injection moulding machine (1) according to the present invention, heating and plasticizing the supplied base resin while feeding it in the feeding direction (F) directed toward the tip portion in conjunction with the rotation of the screw (10), and continuously drawing the elongated roving (14) supplied from the fiber supplying portion (15) into the cylinder and kneading it with the base resin in conjunction with the rotation of the screw to prepare the fiber-reinforced resin and a step of filling a mould internal space of a mould (8) connected to the cylinder via the nozzle (6) with the prepared fiber-reinforced resin to mould the resin moulded article.

Although the numerals, etc., inside parentheses in this section indicate reference signs of corresponding components in a preferred embodiment to be described below, the reference signs are not intended to restrict the patent claims.

EFFECTS OF THE INVENTION

The invention of Claim 1 enables breakage of the reinforcing fibers to be suppressed by the longitudinal cross-sectional area along an axial direction of the screw of the space arranged between the first flights formed in a spiral on the outer peripheral surface of the screw being made greater at the downstream side in the feeding direction of the base resin (tip portion side of the cylinder) than at the upstream side (base end side of the cylinder) in the fiber kneading stage.

That is, the reinforcing fibers break and become short in fiber length when, upon being stressed and bent, an angle thereof exceeds a certain range. Disturbance of shear rate distribution or speed distribution, in other words, turbulence of the fiber-reinforced resin that is generated inside the space between mutually adjacent first flights is involved in the breakage of the reinforcing fibers. And, by increasing a space volume defined by the longitudinal cross-sectional area of the space between mutually adjacent first flights, it is possible to decrease the influence of the turbulence and suppress the breakage of the reinforcing fibers.

Moreover, the above arrangement also enables the roving immediately after being supplied from the fiber supplying portion to be defibrated satisfactorily into individual reinforcing fibers at the upstream side of the fiber kneading stage that is small in the longitudinal cross-sectional area of the space between the first flights by a shear force generated inside the space at the upstream side and dispersed uniformly in the base resin.

Therefore, the above arrangement enables the fiber length of the reinforcing fibers contained in the resin moulded article to be made even longer than is possible presently mainly by a function of the space between the first flights at the downstream side of the fiber kneading stage and to improve dispersibility of the reinforcing fibers that tends to decrease with increasing fiber length mainly by a function of the space between the first flights at the upstream side of the fiber kneading stage. It is thus made possible to produce a resin moulded article that is higher in strength, higher in rigidity, and moreover excellent in wear resistance, fatigue resistance, etc., as well.

According to the inventions of Claims 2 to 4, in the fiber kneading stage, the region at the upstream side in the feeding direction of the base resin (hereinafter referred to in abridged form at times as the "first fiber kneading stage") is made a multiple flight set structure having two or more sets of the first flights and the region further to the downstream side than the first fiber kneading stage (hereinafter referred to in abridged form at times as the "second fiber kneading stage") is made, with one set of first flights among the flights of the multiple flight set structure remaining, to be of at least one type of shape among the following respective shapes as a shape allowing passage of the base resin and the reinforcing fibers.

- The other sets of first flights are omitted.
- The second flights of large clearance are formed in place of the other sets of the first flights.
- The second flights provided with notches are formed in place of the other sets of the first flights.

It is thereby enabled to set the longitudinal cross-sectional area $A2b$ (mm$^2$) of the space arranged between the first flights of the remaining one set in the second fiber kneading stage to any value greater than the longitudinal cross-sectional area $A2a$ (mm$^2$) of the space arranged between the mutually adjacent first flights of two or more sets in the first fiber kneading stage.

Moreover, the second fiber kneading stage is easily processed because it is possible to make it be of the at least one type of shape, for example, by just forming the flights of the same multiple flight set structure as the first fiber kneading stage and thereafter letting the first flights of the one set remain without processing and processing the other set of flights. Here, the second fiber kneading stage may be formed to the at least one type of shape in advance and not by processing afterwards.

The inventions of Claims 5 and 6 enable the longitudinal cross-sectional area $A2b$ (mm$^2$) of the space arranged between the first flights in the second fiber kneading stage to be set to any value greater than the longitudinal cross-sectional area $A2a$ (mm$^2$) of the space arranged between the first flights in the first fiber kneading stage regardless of whether the flights constituting the fiber kneading stage are of a single flight set structure with just one set of flights or a multiple flight set structure with two or more sets of flights.

Based on the effects due to the shape of the screw described above, the invention of Claim 7 enables the fiber length of the reinforcing fibers contained in the resin moulded article to be made even longer than is possible with the present direct roving method and also enables improvement of the dispersibility of the reinforcing fibers that tend to be decreased by the fiber length being increased. It is thus possible to produce a resin moulded article that is high in strength, high in rigidity, and moreover excellent in wear resistance, fatigue resistance, etc., as well.

BRIEF DESCRIPTION OF DRAWINGS

[FIG. 1] FIG. 1 is a sectional view taken along a feeding direction of a base resin for describing in outline an example of a preferred embodiment of an injection moulding machine according to the present invention.

[FIG. 2] FIG. 2 is a front view of an example of a specific appearance of a screw incorporated in the injection moulding machine of the example of FIG. 1.

[FIG. 3] FIG. 3(a) is an enlarged sectional view taken along the feeding direction of the base resin of a portion of a first fiber kneading stage of the screw of FIG. 2, FIG. 3(b) is an enlarged sectional view taken along the feeding direction of the base resin of a portion of a second fiber kneading stage, and FIG. 3(c) is an enlarged sectional view taken along the feeding direction of the base resin of a portion of a modification example of the second fiber kneading stage.

[FIG. 4] FIG. 4(a) is an enlarged front view taken along the feeding direction of the base resin of a portion of yet another modification example of the second fiber kneading stage, FIG. 4(b) is an enlarged sectional view taken along a direction intersecting the feeding direction of the base resin of a portion of the modification example, and FIG. 4(c) is an enlarged sectional view taken along the direction intersecting the feeding direction of the base resin of a portion of yet another modification example.

[FIG. 5] FIG. 5(a) is an enlarged front view of a portion of another example of the screw incorporated in the injection moulding machine of the example of FIG. 1 and FIG. 5(b) is an enlarged front view of a portion of yet another example of the screw incorporated in the injection moulding machine of the example of FIG. 1.

[FIG. 6] FIG. 6 is a graph of results of measuring number average fiber lengths of reinforcing fibers in resin moulded articles produced by an example and a comparative example of the present invention.

[FIG. 7] FIG. 7 is a graph of results of measuring tensile strengths of resin moulded articles produced by the example and the comparative example of the present invention.

EMBODIMENTS OF THE INVENTION

<Injection Moulding Machine>

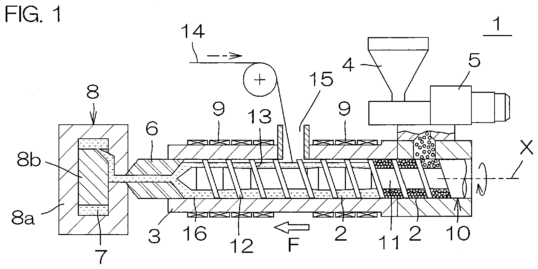

FIG. 1 is a sectional view taken along a feeding direction F of a base resin 2 for describing in outline an example of a preferred embodiment of an injection moulding machine 1 according to the present invention.

Referring to FIG. 1, the injection moulding machine 1 includes a cylinder 3 that heats and plasticizes the base resin 2 while feeding it in the feeding direction F indicated by an open arrow in the figure. The cylinder 3 is formed to a cylindrical shape.

A hopper 4 containing the base resin 2 that, for example, has been made into pellets is connected via a resin supplying apparatus 5 to a vicinity of a base end at an upstream side (right side in the figure) in the feeding direction F of the cylinder 3. The resin supplying apparatus 5 is an example of a resin supplying portion that supplies the base resin 2 contained in the hopper 4 to the cylinder 3, for example, at a supply amount set in advance.

To a tip portion at a downstream side (left side in the figure) in the feeding direction F of the cylinder 3, a nozzle 6 is connected and a mould 8 corresponding to a shape of a resin moulded article 7 to be produced is connected via the nozzle 6. The nozzle 6 is connected to a sprue of the mould 8 at least during injection moulding as shown in the figure.

On an outer periphery of the cylinder 3, a plurality of cylindrical heaters 9 arranged to heat and plasticize the base resin 2 fed through the cylinder 3 are provided along the feeding direction F of the base resin 2 such as to surround the outer periphery of the cylinder 3. The plurality of heaters 9 may, for example, be temperature controlled collectively or may each be temperature controlled individually.

A screw 10 arranged to feed the base resin 2 in the feeding direction F while kneading it inside the cylinder 3 is provided inside the cylinder 3. The screw 10 includes a rotating shaft 11 extending across substantially an entire length of the cylinder 3 and flights 12 of spiral shape projecting outward from an outer peripheral surface of the rotating shaft 11. The rotating shaft 11 and the flights 12 are, for example, formed integrally.

The screw 10 is inserted inside the cylinder 3 with a central axis of the rotating shaft 11 being matched with an axis X of the cylinder 3 such as to be rotatable around the axis X.

The rotating shaft 11 is made smaller in diameter than an inner peripheral surface of the cylinder 3 across substantially an entire length in the feeding direction F of the base resin 2.

A shape of a projection of an outer edge in a radial direction of each flight 12 on a plane orthogonal to the axis X is made a circle centered on the axis X and the circles of the flights 12 are disposed concentrically to the rotating shaft 11.

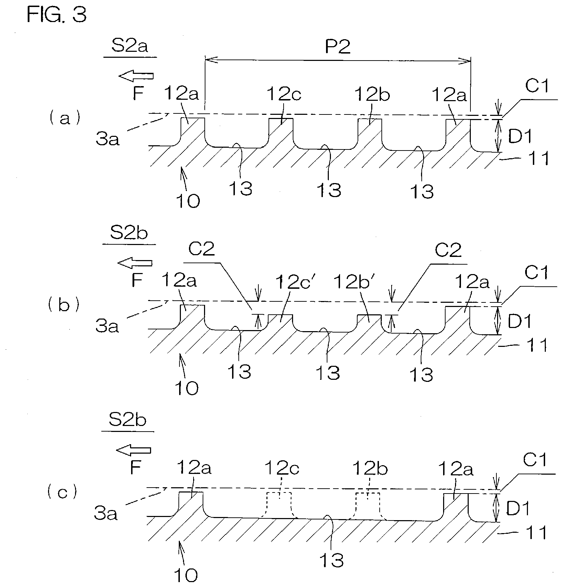

Also, an outer diameter of the circles of the flights 12 are made slightly smaller in diameter than an inner diameter of the inner peripheral surface of the cylinder 3. Therefore, in a disposition state of the figure in which the central axis of the rotating shaft 11 is matched with the axis X of the cylinder 3, the outer edge in the radial direction of each flight 12 faces the inner peripheral surface of the cylinder 3 across a predetermined clearance (C1 in FIGS. 3(a) to 3(c)) along its entire periphery.

Also, on an outer periphery of the screw 10, recessed grooves 13 of spiral shape each arranged to contain and feed the base resin 2 between itself and the inner peripheral surface of the cylinder 3 are arranged between the outer peripheral surface of the rotating shaft 11 and the flights 12.

The base resin 2 is supplied from the hopper 4 into the recessed grooves 13 via the resin supplying apparatus 5.

By an unillustrated rotating mechanism, the screw 10 is rotated in one direction as indicated by a solid line arrow in the figure. Thereby, the base resin 2 supplied from the hopper 4 into the recessed grooves 13 is fed in the feeding direction F indicated by the open arrow while being kneaded by receiving a shear force from the flights 12 in conjunction with the rotation of the screw 10 and at the same time is heated and gradually plasticized by heat from the heaters 9.

As a fiber supplying portion arranged to supply an elongated roving 14 into the cylinder 3 continuously, a fiber supplying port 15 is provided such as to connect an interior and an exterior of the cylinder 3 at an intermediate portion thereof in the feeding direction F of the base resin 2.

The roving 14 that is supplied continuously through the fiber supplying port 15 into the base resin 2 in the middle of being fed through the cylinder 3 is kneaded with the base resin 2 while being defibrated into individual reinforcing fibers by receiving the shear force from the flights 12 in conjunction with the rotation of the screw 10. A fiber-reinforced resin 16 that is to be a base of the resin moulded article 7 is thereby prepared inside the cylinder 3 in an interim until the nozzle 6 is reached from the fiber supplying port 15.

The screw 10 is gradually moved to the upstream side in the feeding direction F of the base resin 2 inside the cylinder 3 in accordance with a gradual increase in an amount of the prepared fiber-reinforced resin 16 prior to injection moulding. The prepared fiber-reinforced resin 16 is thereby accumulated at a tip portion side of the cylinder 3 at which the nozzle 6 is connected.

Then, in the state where the mould 8 is connected to the cylinder 3 via the nozzle 6, the screw 10 is moved to the downstream side in the feeding direction F. The fiber-reinforced resin 16 accumulated at the tip portion side of the cylinder 3 is then injected through the nozzle 6 and made to fill a mould internal space of the mould 8 and the resin moulded article 7 is produced.

The fiber supplying port 15 also functions as a vent port that removes gas, moisture, etc., generated when the base resin 2 is heated and plasticized.

In the example of FIG. 1, the mould 8 includes an outer mould (cavity) 8a corresponding to an external shape of the resin moulded article 7 and an inner mould (core) 8b corresponding to an internal shape of the resin moulded article 7. However, it is possible to set the shape and structure of the mould 8 arbitrarily in accordance with the shape of the resin moulded article 7 to be produced.

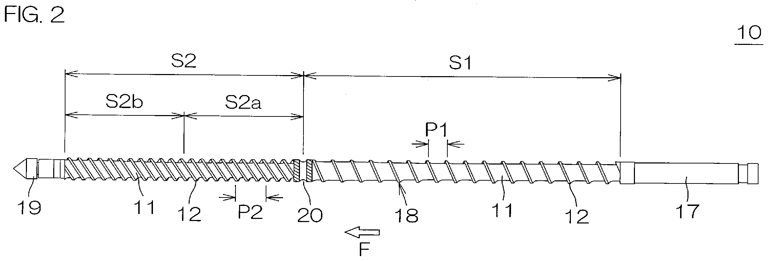

FIG. 2 is a front view of an example of a specific appearance of the screw 10 incorporated in the injection moulding machine 1 of the example of FIG. 1.

Referring to FIG. 2, the screw 10 is formed to a single circular column and includes a connection portion 17 to the unillustrated rotating mechanism, a main body portion 18, and a tip portion 19 facing the nozzle 6 in that order from the upstream side to the downstream side in the feeding direction F of the base resin 2 indicated by a white arrow in the figure.

At an intermediate position of the main body portion 18 in the feeding direction F of the base resin 2 is provided a Dulmage 20 arranged, for example, to suppress a base resin that is not plasticized sufficiently from being fed to the downstream side in the feeding direction F, etc.

Also, a region of the main body portion 18 further to the upstream side in the feeding direction F than the Dulmage 20 is arranged as a plasticizing stage S1 for heating and plasticizing the base resin supplied from the resin supplying apparatus 5 while feeding it in the feeding direction F in conjunction with the rotation of the screw 10. At the plasticizing stage S1, one set of flights 12 is formed at a fixed pitch width P1.

Also, a region of the main body portion 18 further to the downstream side in the feeding direction F than the Dulmage 20 is arranged as a fiber kneading stage S2 at which the roving 14 supplied from the fiber supplying port 15 is drawn continuously into the cylinder 3 while being wound around a periphery of the screw 10 in conjunction with the rotation thereof and is kneaded with the plasticized base resin to prepare the fiber-reinforced resin 16.

The respective portions constituting the main body portion 18 are set in respective formation positions and lengths in axial direction such that regardless of whether the screw 10 moves inside the cylinder 3 to the upstream side or the downstream side in the feeding direction F in conjunction with the series of operations of the injection moulding described above, a region of the fiber kneading stage S2 in a vicinity of the Dulmage 20 always faces the fiber supplying port 15. The roving 14 supplied from the fiber supplying port 15 is thereby enabled to be supplied smoothly to the fiber kneading stage S2 and kneaded with the base resin 2.

As mentioned above, the fiber kneading stage S2 includes a first fiber kneading stage S2a at the upstream side in the feeding direction F of the base resin and a second fiber kneading stage S2b at a further downstream side.

FIG. 3(a) is an enlarged sectional view taken along the feeding direction F of the base resin 2 of a portion of the first fiber kneading stage S2a of the screw 10 of FIG. 2.

Referring to FIG. 2 and FIG. 3(a), the first fiber kneading stage S2a is arranged as a multiple flight set structure provided with three sets of first flights 12a to 12c.

The outer edge in the radial direction of each of the first flights 12a to 12c faces the inner peripheral surface 3a of the cylinder 3 across a predetermined clearance C1 along its entire periphery.

The clearance C1 is set to a dimension capable of allowing the rotation of the screw 10 inside the cylinder 3 and suppressing the screw 10 from contacting the inner peripheral surface 3a of the cylinder 3 even when it whirls.

Also, although the clearance C1 is not of a dimension that completely restricts passage of the base resin 2 and the reinforcing fibers as mentioned above, it is set to a dimension enabling feeding of the base resin 2 and the reinforcing fibers in the feeding direction F in conjunction with the rotation of the screw 10 while suppressing the passage of the base resin 2 and the reinforcing fibers.

The clearance C1, although not restricted in particular, is, for example, preferably not less than 0.05 mm and is not more than 0.5 mm and especially preferably not more than 0.2 mm. On the other hand, a diameter of the reinforcing fibers is, for example, approximately 5 to 50 $\mu$m.

Also, the respective sets of the first flights 12a to 12c are each formed at a fixed pitch width P2 (> P1) greater than the pitch width P1 of the one set of flights 12 of the plasticizing stage S1 and are shifted in the feeding direction F of the base resin by 1/3 of the pitch width P2 each such as to be formed at equal intervals in the feeding direction F.

If the pitch width P2 of the first flights 12a to 12c is set such that P2 > P1 as mentioned above, a feeding speed of the base resin 2 is made faster further to the downstream side than the Dulmage 20 (at the fiber kneading stage S2 side) than at the upstream side (at the plasticizing stage S1 side) and/or a feeding amount of the base resin 2 is made greater further to the downstream side than the Dulmage 20 than at the upstream side.

Occurrence of so-called vent-up with which the base resin 2 leaks out from the fiber supplying port 15 in the middle of being fed through the cylinder 3 is thus suppressed.

Here, to suppress the occurrence of vent-up, any one type or two or more types of the means indicated below may be used combinedly in addition to adjusting the pitch width as mentioned above.

· Adjusting an outer diameter of the rotating shaft 11 of the screw 10 such that a depth in the radial direction of each recessed groove 13 between the flights 12 adjacent to the Dulmage 20 is greater with the recessed groove 13 further to the downstream side than the Dulmage 20 (at the fiber kneading stage S2 side) than with the recessed groove 13 at the upstream side (plasticizing stage S1 side).
· Setting heating temperatures of the heaters 9 to different temperatures at the upstream side and the downstream side of the fiber supplying port 15.
· Adjusting a supply amount of the base resin 2 from the hopper 4 by the resin supplying apparatus 5.
· Adopting another conventionally known method for suppressing the occurrence of vent-up.

FIG. 3(b) is an enlarged sectional view taken along the feeding direction F of the base resin 2 of a portion of the second fiber kneading stage S2b of the screw 10 of FIG. 2.

Referring to FIG. 2 and FIG. 3(b), the second fiber kneading stage S2b is arranged as a multiple flight set structure provided with three sets of flights continuing from the first fiber kneading stage S2a and having the same pitch width P2 and the same formation interval.

However, in the second fiber kneading stage S2b, one set of the first flights 12a is made to remain and in place of the other two sets of the first flights 12b and 12c, second flights 12b' and 12c' are provided in continuation to the other two sets of the first flights 12b and 12c.

With each of the second flights 12b' and 12c', a clearance C2 between the outer edge in the radial direction and the inner peripheral surface 3a of the cylinder 3 is made greater than the clearance C1 of the first flights 12a to 12c (C2 > C1). In detail, the clearance C2 is set to a dimension capable of allowing passage of the base resin 2 and the reinforcing fibers.

The clearance C2, although not restricted in particular, is, for example, not less than 0.8 mm and especially preferably not less than 1 mm.

The three recessed grooves 13 between the first flights 12a of the remaining one set are thereby connected into one via a gap formed at outer sides of the outer edges in the radial direction of the second flights 12b' and 12c' by the providing of the clearance C2 to enable a greater space to be formed between the first flights 12a of the one set.

A longitudinal cross-sectional area A2b (mm$^2$) of the space is then made greater than a longitudinal cross-sectional area A2a (mm$^2$) of a space arranged by the single recessed groove 13 in the first fiber kneading stage S2a to enable formula (I) to be satisfied.

A spatial volume defined by the longitudinal cross-sectional area A2b (mm$^2$) of the space between the first flights 12a of the remaining one set is thus made large to lessen influence of turbulence and enable breakage of the reinforcing fibers to be suppressed. It is thus enabled to make a fiber length of the reinforcing fibers contained in the resin moulded article 7 even longer than is possible presently.

Therefore, in combination with the enabling of the roving 14 immediately after being supplied from the fiber supplying port 15 to be defibrated satisfactorily into individual reinforcing fibers and dispersed uniformly in the base resin in the first fiber kneading stage S2a, it is made possible to produce the resin moulded article 7 that is higher in strength, higher in rigidity, and moreover excellent in wear resistance, fatigue resistance, etc., as well.

The second flights 12b' and 12c' are easily processed because it is possible to form these, for example, by simply grinding etc., outer edges of two sets of flights formed in advance in continuation to and in the same dimensions as the first flights 12b and 12c of the first fiber kneading stage S2a.

Moreover, it is also possible to easily set the longitudinal cross-sectional area A2b (mm²) of the space arranged between first flights 12a of the remaining one set to any value by simply adjusting a processing amount of the grinding, etc.

However, the second flights 12b' and 12c' may be formed in advance to be of a height having the predetermined clearance C2 instead of being formed by grinding, etc., afterwards.

Whereas in the example of the figure, the clearance C2 of the second flights 12b' and 12c' is set to the same dimension, the clearance C2 may be differed for each set of the second flights 12b' and 12c'. However, in consideration of ease of processing, etc., it is preferable to make the clearance C2 the same for each set of the second flights 12b' and 12c'.

FIG. 3(c) is an enlarged sectional view taken along the feeding direction F of the base resin 2 of a portion of a modification example of the second fiber kneading stage S2b.

Referring to FIG. 2 and FIG. 3(c), in the present example, one set of the first flights 12a is made to remain and the other two sets of the first flights 12b and 12c are omitted in the second fiber kneading stage S2b.

The three recessed grooves 13 between the first flights 12a of the remaining one set are thereby arranged as one large recessed groove 13 to enable a greater space to be formed between the first flights 12a of the one set. The longitudinal cross-sectional area A2b (mm²) of the space is then made greater than the longitudinal cross-sectional area A2a (mm²) of the space arranged by the single recessed groove 13 in the first fiber kneading stage S2a to enable formula (I) to be satisfied.

Therefore, the influence of turbulence is likewise lessened and the breakage of the reinforcing fibers is suppressed to enable the fiber length of the reinforcing fibers contained in the resin moulded article 7 to be made even longer than is possible presently.

And, in combination with the enabling of the roving 14 immediately after being supplied from the fiber supplying port 15 to be defibrated satisfactorily into individual reinforcing fibers and dispersed uniformly in the base resin in the first fiber kneading stage S2a, it is made possible to produce the resin moulded article 7 that is higher in strength, higher in rigidity, and moreover excellent in wear resistance, fatigue resistance, etc., as well.

Also, although in the example of FIG. 3(c), both sets of the first flights 12b and 12c are omitted, just one of these sets may be omitted and the other set may be arranged as second flights that are large in the clearance C2 with respect to the inner peripheral surface 3a of the cylinder 3 as in the example of FIG. 3(b).

Processing for omitting the first flights 12b and 12c is easy because it suffices, for example, to simply remove by grinding, etc., two sets of flights formed in advance in continuation to and in the same dimensions as the first flights 12b and 12c of the first fiber kneading stage S2a.

However, forming of the first flights 12b and 12c may be omitted in advance instead of performing removal by grinding, etc., afterwards.

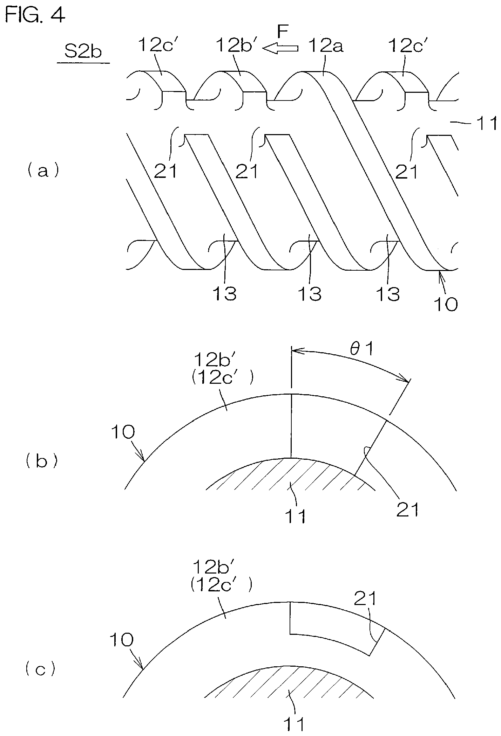

FIG. 4(a) is an enlarged front view taken along the feeding direction F of the base resin 2 of a portion of yet another modification example of the second fiber kneading stage S2b and FIG. 4(b) is an enlarged sectional view taken along a direction intersecting the feeding direction F of the base resin 2 of a portion of the modification example.

Referring to FIG. 2 and FIGS. 4(a) and 4(b), in the present example, the second fiber kneading stage S2b is arranged as a multiple flight set structure provided with three sets of flights continuing from the first fiber kneading stage S2a and having the same pitch width P2 and the same formation interval.

However, in the second fiber kneading stage S2b, one set of the first flights 12a is made to remain and in place of the other two sets of the first flights 12b and 12c, second flights 12b' and 12c' are provided in continuation to the other two sets of the first flights 12b and 12c.

The second flights 12b' and 12c' are each provided with a notch 21 connecting the upstream side and the downstream side in the feeding direction F of the base resin 2 indicated by a white arrow in the figure and passage of the base resin 2 and the reinforcing fibers via the notch 21 is allowed.

The three recessed grooves 13 between the first flights 12a of the remaining one set are thereby connected into one via the notches 21 to enable a greater space to be formed between the first flights 12a of the one set. The longitudinal cross-sectional area A2b (mm²) of the space is then made greater than the longitudinal cross-sectional area A2a (mm²) of the space arranged by the single recessed groove 13 in the first fiber kneading stage S2a to enable formula (I) to be satisfied.

Therefore, the influence of turbulence is likewise lessened and the breakage of the reinforcing fibers is suppressed to enable the fiber length of the reinforcing fibers contained in the resin moulded article 7 to be made even longer than is possible presently.

And, in combination with the enabling of the roving 14 immediately after being supplied from the fiber supplying port 15 to be defibrated satisfactorily into individual reinforcing fibers and dispersed uniformly in the base resin in the first fiber kneading stage S2a, it is made possible to produce the resin moulded article 7 that is higher in strength, higher in rigidity, and moreover excellent in wear resistance, fatigue resistance, etc., as well.

Although the notches 21 are shown at just one location each in the peripheral direction in each of the second flights 12b' and 12c' in the figure, it is also possible to provide the notches 21 arbitrarily at a plurality of locations in the peripheral direction at equal angles or unequal angles.

It is also possible to set a size of the notches 21 arbitrarily.

For example, in the example of the figure, the notches 21 are provided across a range of an opening angle θ1 centered on the central axis of the rotating shaft 11 of the screw 10 and in a range of reaching the outer peripheral surface of the rotating shaft 11 from the outer edges in the radial direction of the flights 12b and 12c.

It is possible to set the opening angle θ1 of the notches 21 in an arbitrary range of exceeding 0° and being less than 360°. Also, as shown in FIG. 4(c), the notches 21 may be provided in a range from the outer edges in the radial direction of the the second flights 12b' and 12c' up to intermediate portions in the radial direction of the 12b and 12c.

It is possible to form the notches 21 by grinding, etc., the outer edges of the flights 12b and 12c and it is also possible to set the longitudinal cross-sectional area A2b (mm$^2$) of the space arranged between the first flights 12a of the remaining one set to any value easily by simply adjusting, as described above, the number and size of the notches 21 formed.

However, the second flights 12b' and 12c' may be formed to shapes provided with the predetermined notches 21 in advance instead of forming the notches 21 by grinding, etc., afterwards.

Also, although in the example of FIG. 4(a), the notches 21 are provided in both sets of the second flights 12b' and 12c', the notches 21 may be provided in just one of these sets and the other set may be made large in the clearance C2 with respect to the inner peripheral surface 3a of the cylinder 3 as in the example of FIG. 3(b) or may be omitted as in the example of FIG. 3(c).

Here, to make the fiber length of the reinforcing fibers as long as possible, any one type or two or more types of the means indicated below may be used combinedly in addition to adjusting the longitudinal cross-sectional area of the space described above.

· Adjusting the clearance C1 between the inner peripheral surface 3a of the cylinder 3 and the outer edges in radial direction of the flights 12.
· Making a nozzle diameter of the nozzle 6, a runner diameter of the mould 8, etc., greater than ordinary.
· Adopting another conventionally known method for making the fiber length of the reinforcing fibers contained in the resin moulded article 7 longer.

Also, in the examples of the respective figures, the outer diameter of the rotating shaft 11 is gradually increased from the upstream side toward the downstream side in the feeding direction F of the base resin 2 at least in the second fiber kneading stage S2b of the fiber kneading stage S2.

The depth in the radial direction (D1 in FIGS. 3(a) to 3(c)) of the recessed grooves 13 arranged between the respective flights 12a to 12c is thereby decreased gradually from the upstream side toward the downstream side in the feeding direction F such that the shear force generated inside the recessed grooves 13 is gradually increased to enable the base resin 2 and the reinforcing fibers to be bound more firmly.

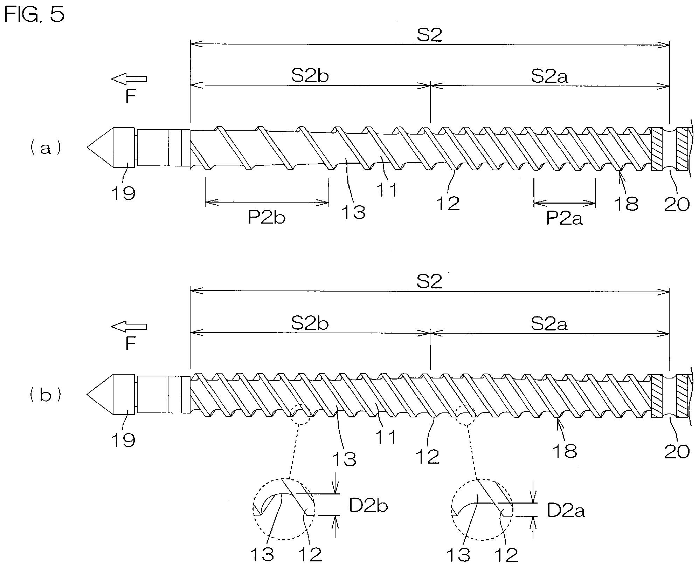

FIG. 5(a) is an enlarged front view of a portion of another example of the screw 10 incorporated in the injection moulding machine 1 of the example of FIG. 1.

In FIG. 5(a), just a portion of the screw 10 further to the downstream side in the feeding direction F of the base resin 2 indicated by a white arrow in the figure than the Dulmage 20 is shown and although the upstream side is not shown, the entirety is arranged in the same manner as the screw 10 of FIG. 2.

That is, referring to FIG. 2 and FIG. 5(a), the screw 10 of the present example is formed to a single circular column and includes the connection portion 17, the main body portion 18, and the tip portion 19 facing the nozzle 6 in that order from the upstream side to the downstream side in the feeding direction F.

Also, the Dulmage 20 is provided at an intermediate position of the main body portion 18 in the feeding direction F of the base resin 2 and the region further to the upstream side than the Dulmage 20 is arranged as the plasticizing stage S1. At the plasticizing stage S1, one set of flights 12 is formed at a fixed pitch width P1.

The region of the main body portion 18 further to the downstream side in the feeding direction F than the Dulmage 20 is arranged as the fiber kneading stage S2 at which the roving 14 supplied from the fiber supplying port 15 is drawn continuously into the cylinder 3 while being wound around the periphery of the screw 10 in conjunction with the rotation thereof and is kneaded with the plasticized base resin.

As mentioned above, the fiber kneading stage S2 includes the first fiber kneading stage S2a at the upstream side in the feeding direction F of the base resin and the second fiber kneading stage S2b at the further downstream side.

The first fiber kneading stage S2a is arranged as a multiple flight set structure provided with three sets of first flights 12.

To suppress the occurrence of vent-up, the respective sets of the first flights 12 are each formed at a fixed pitch width P2a (> P1) greater than the pitch width P1 of the one set of flights 12 of the plasticizing stage S1 and are shifted in the feeding direction F of the base resin by 1/3 of the pitch width P2a each such as to be formed at equal intervals in the feeding direction F.

The second fiber kneading stage S2b is arranged as a multiple flight set structure provided with the three sets of flights 12 continuing from the first fiber kneading stage S2a.

However, in the second fiber kneading stage S2b, a pitch width P2b of the respective first flights 12 is made greater than the pitch width P2a of the respective first flights 12 in the first fiber kneading stage S2a (P2b > P2a).

In more detail, the pitch width P2b is made greater than the pitch width P2a at a boundary portion with respect to the first fiber kneading stage S2a and the pitch width P2b is furthermore increased gradually toward the tip portion 19.

The longitudinal cross-sectional area A2b (mm²) of each space arranged by the recessed grooves 13 between the respective first flights 12 in the second fiber kneading stage S2b is thereby made greater than the longitudinal cross-sectional area A2a (mm²) of each space arranged by the recessed grooves 13 between the respective first flights 12 in the first fiber kneading stage S2a to enable formula (I) to be satisfied.

Therefore, the influence of turbulence is likewise lessened and the breakage of the reinforcing fibers is suppressed to enable the fiber length of the reinforcing fibers contained in the resin moulded article 7 to be made even longer than is possible presently.

And, in combination with the enabling of the roving 14 immediately after being supplied from the fiber supplying port 15 to be defibrated satisfactorily into individual reinforcing fibers and dispersed uniformly in the base resin in the first fiber kneading stage S2a, it is made possible to produce the resin moulded article 7 that is higher in strength, higher in rigidity, and moreover excellent in wear resistance, fatigue resistance, etc., as well.

Here, in the example of FIG. 5(a), two sets among the three sets of the first flights 12 besides one set of the flights 12 that is made to remain may further be arranged in at least one type of manner among:

　· arranging as second flights of large clearance C2 with respect to the inner peripheral surface 3a of the cylinder 3 as in the example of FIG. 3(b),
　· omitting as in the example of FIG. 3(c), and
　· arranging as second flights provided with the notches 21 as in the example of FIG. 4(a).

Also, the first flights 12 may be arranged to be of a single flight set structure of just one set of flights.

Also, with the example in the figure, the fiber kneading stage S2 is divided into the first fiber kneading stage S2a and the second fiber kneading stage S2b and the pitch width P2b of the first flights 12 of the latter is made greater than the pitch width P2a of the first flights 12 of the former. However, the pitch width may instead be gradually increased continuously from the upstream side (Dulmage 20 side) toward the downstream side (tip portion 19) without dividing the fiber kneading stage S2 into two stages.

Also, with the example in the figure, the outer diameter of the rotating shaft 11 is gradually increased from the upstream side toward the downstream side in the feeding direction F of the base resin 2 at least in the second fiber kneading stage S2b of the fiber kneading stage S2.

The depth in the radial direction of the recessed grooves 13 arranged between the respective flights 12 is thereby decreased gradually from the upstream side toward the downstream side in the feeding direction F such that the shear force generated inside the recessed grooves 13 is gradually increased to enable the base resin 2 and the reinforcing fibers to be bound more firmly.

FIG. 5(b) is an enlarged front view of a portion of yet another example of the screw 10 incorporated in the injection moulding machine 1 of the example of FIG. 1.

In FIG. 5(b), just a portion of the screw 10 further to the downstream side in the feeding direction F of the base resin 2 indicated by a white arrow in the figure than the Dulmage 20 is likewise shown and although the upstream side is not shown, the entirety is arranged in the same manner as the screw 10 of FIG. 2.

That is, referring to FIG. 2 and FIG. 5(b), the screw 10 of the present example is formed to a single circular column and includes the connection portion 17, the main body portion 18, and the tip portion 19 facing the nozzle 6 in that order from the upstream side to the downstream side in the feeding direction F.

Also, the Dulmage 20 is provided at an intermediate position of the main body portion 18 in the feeding direction F of the base resin 2 and the region further to the upstream side than the Dulmage 20 is arranged as the plasticizing stage S1. At the plasticizing stage S1, one set of flights 12 is formed at a fixed pitch width P1.

The region of the main body portion 18 further to the downstream side in the feeding direction F than the Dulmage 20 is arranged as the fiber kneading stage S2 at which the roving 14 supplied from the fiber supplying port 15 is drawn continuously into the cylinder 3 while being wound around the periphery of the screw 10 in conjunction with the rotation thereof and is kneaded with the plasticized base resin.

As mentioned above, the fiber kneading stage S2 includes the first fiber kneading stage S2a at the upstream side in the feeding direction F of the base resin and the second fiber kneading stage S2b at the further downstream side.

The first fiber kneading stage S2a is arranged as a multiple flight set structure provided with three sets of first flights 12.

To suppress the occurrence of vent-up, the respective sets of the first flights 12 are each formed at the fixed pitch width P2a (> P1) greater than the pitch width P1 of the one set of flights 12 of the plasticizing stage S1 and are shifted in the feeding direction F of the base resin by 1/3 of the pitch width P2a each such as to be formed at equal intervals in the feeding direction F.

Also, with the example in the figure, the outer diameter of the rotating shaft 11 is increased gradually from the upstream side toward the downstream side in the feeding direction F of the base resin 2 in the first fiber kneading stage S2a.

A depth D2a in the radial direction of the recessed grooves 13 arranged between the respective flights 12 is thereby decreased gradually from the upstream side toward the downstream side in the feeding direction F such that the shear force generated inside the recessed grooves 13 is gradually increased to enable the base resin 2 and the reinforcing fibers to be bound more firmly.

The second fiber kneading stage S2b is arranged as a multiple flight set structure provided with the three sets of flights 12 continuing from the first fiber kneading stage S2a.

However, in the second fiber kneading stage S2b, the outer diameter of the rotating shaft 11 is decreased gradually from the upstream side toward the downstream side in the feeding direction F of the base resin 2.

A depth D2b in the radial direction of the recessed grooves 13 arranged between the respective first flights 12 is thereby increased gradually toward the downstream side and made greater than the depth D2a of the recessed grooves 13 in the first fiber kneading stage S2a especially in comparison to that in a region thereof at the downstream side in the feeding direction F (D2b > D2a).

The longitudinal cross-sectional area A2b (mm$^2$) of each space arranged by the recessed grooves 13 between the respective first flights 12 in the second fiber kneading stage S2b is thereby made greater than the longitudinal cross-sectional area A2a (mm$^2$) of each space arranged by the recessed grooves 13 between the respective first flights 12 in the first fiber kneading stage S2a to enable formula (I) to be satisfied.

Therefore, the influence of turbulence is likewise lessened and the breakage of the reinforcing fibers is suppressed to enable the fiber length of the reinforcing fibers contained in the resin moulded article 7 to be made even longer than is possible presently.

And, in combination with the enabling of the roving 14 immediately after being supplied from the fiber supplying port 15 to be defibrated satisfactorily into individual reinforcing fibers and dispersed uniformly in the base resin in the first fiber kneading stage S2a, it is made possible to produce the resin moulded article 7 that is higher in strength, higher in rigidity, and moreover excellent in wear resistance, fatigue resistance, etc., as well.

Here, in the example of FIG. 5(b), two sets among the three sets of the first flights 12 besides one set of the flights 12 that is made to remain may further be arranged in at least one type of manner among:

- arranging as second flights of large clearance C2 with respect to the inner peripheral surface 3a of the cylinder 3 as in the example of FIG. 3(b),
- omitting as in the example of FIG. 3(c), and
- arranging as second flights provided with the notches 21 as in the example of FIG. 4(a).

Also, with the example of FIG. 5(b) or upon combining it with one type among the three types mentioned above, the pitch width of the three sets of the first flights 12 may further be increased as in the example of FIG. 5(a).

Also, the first flights 12 may be arranged to be of a single flight set structure of just one set of flights.

Also, with the example in the figure, the fiber kneading stage S2 is divided into the first fiber kneading stage S2a and the second fiber kneading stage S2b and the depth D2b of the recessed grooves 13 of the latter is made greater than the depth D2a of the recessed grooves 13 of the former. However, the depth of the recessed grooves 13 may instead be gradually increased continuously from the upstream side (Dulmage 20 side) toward the downstream side (tip portion 19) without dividing the fiber kneading stage S2 into two stages.

<Resin Moulded Article Production Method>

To produce the resin moulded article 7 by a resin moulded article production method of the present invention using the mould 8 and the injection moulding machine 1 that includes any of the screws 10 described above, first, the base resin 2 is supplied to the hopper 4. Also, the elongated roving 14 that is continuous is prepared.

As the base resin 2, it is possible to use various resins capable of constituting the fiber-reinforced resin 16 that is the forming material of the resin moulded article 7. Polyamide (PA), polyphenylene sulfide (PPS), etc., can be cited in particular as examples of the base resin 2 for forming the resin moulded article 7 with which the abovementioned strength, rigidity, wear resistance, etc., are required.

Aliphatic polyamides such as PA6, PA66, PA46, PA12, PA612, PA610, PA11, PA410, etc., and aromatic polyamides such as PA6T, PA9T, PA10T, PAMXD6, etc., can be cited as specific examples of the polyamide. As is done conventionally, the base resin 2 should be supplied as pellets, etc.

A polyamide is polymerized by a reaction of carboxylic groups (-COOH) and amino groups (-NH$_2$) remaining at the terminals, for example, by heating the produced resin moulded article 7 in a nonoxidizing atmosphere. The carboxylic groups and the amino groups also react with the reinforcing fibers due to the heating and become adhered firmly to the reinforcing fibers.

A reaction assistant may be blended in the polyamide to accelerate the reaction.

Carbodiimides, etc., can be cited as examples of the reaction assistant. By action of a carbodiimide group (-N=C=N-) in the molecule, a carbodiimide promotes the reaction of the carboxylic groups and the amino groups at the terminals of the polyamide, makes the carboxylic groups and the amino groups react with the reinforcing fibers, and itself reacts with the carboxylic groups and the amino groups. Polymerization of the polyamide is thus enabled by the carbodiimide. Improvement of adhesion of the polyamide and the reinforcing fibers is also enabled.

The carbodiimide is not restricted in particular as long as it is a compound having a carbodiimide group in the molecule and may be a monocarbodiimide having one carbodiimide group or may be a polycarbodiimide having a plurality of carbodiimide groups. Also, it is possible to use various carbodiimides such as aliphatic carbodiimides, aromatic carbodiimides, carbodiimide modified products, etc.

Although a blending proportion of the carbodiimide is not restricted in particular, it is preferably not less than 0.5 mass % and preferably not more than 4 mass % of a total amount of raw materials used to prepare the fiber-reinforced resin 16.

The carbodiimide may be supplied, for example, singularly or upon being dry blended in a master batch with the polyamide.

Glass fibers, carbon fibers, aramid fibers, etc., can be cited as examples of the reinforcing fibers constituting the roving 14. The roving 14 is prepared by collecting together such reinforcing fibers with a sizing agent as is done conventionally.

That is, it is possible to prepare the roving 14, for example, by coating a sizing agent of liquid form onto the reinforcing fibers using a coating roller, etc., and subjecting strands that have been dried at high temperature and collected together further to aligning and winding, etc., in predetermined numbers.

Next, in the production method of the present invention, while temperature controlling the plurality of heaters 9 respectively individually, the resin supplying apparatus 5 is actuated to start supplying the base resin 2 contained in the hopper 4 into the cylinder 3 at the supply amount set in advance. Thereby, as mentioned above, the supplied base resin 2 is fed in the feeding direction F indicated by the open arrow while being kneaded by receiving the shear force from the flights 12 in conjunction with the rotation of the screw 10 and at the same time is heated and gradually plasticized by the heat from the heaters 9.

In this state, the roving 14 is supplied continuously through the fiber supplying port 15 into the base resin 2 in the middle of being fed through the cylinder 3. Thereby, the supplied roving 14 is kneaded with the base resin 2 while being defibrated into individual reinforcing fibers by receiving the shear force from the flights 12 in conjunction with the rotation of the screw 10. The fiber-reinforced resin 16 that is to be the base of the resin moulded article 7 is thereby prepared inside the cylinder 3 in the interim until the nozzle 6 is reached from the fiber supplying port 15.

The prepared fiber-reinforced resin 16 is, as mentioned above, injected through the nozzle 6 into and made to fill the mould internal space between the cavity 8a and the core 8b of the mould 8. The resin moulded article 7 corresponding to the shape of the mould internal space is then produced.

Thereafter, the resin moulded article 7 taken out from the mould 8 is heated in a nonoxidizing atmosphere or annealed in an air atmosphere as necessary to produce the resin moulded article 7.

As examples of the nonoxidizing atmosphere, a reduced pressure atmosphere, an inert gas atmosphere, a reduced pressure atmosphere + inert gas atmosphere, etc., can be cited.

By the production method described above, based on the effects due to the shapes of the screws 10 described above, the fiber length of the reinforcing fibers contained in the resin moulded article 7 is enabled to be made even longer than is possible by the present direct roving method. Thus, it is enabled to produce the resin moulded article 7 that is high in strength, high in rigidity, and moreover excellent in wear resistance, fatigue resistance, etc., as well.

In the examples of the respective figures described above, for example, the flights 12 of the fiber kneading stage S2 is not restricted to three sets of flights but may be of one set of flights, two sets of flights, or four or more sets of flights. Also, the flights 12 of the plasticizing stage S1 may instead be arranged as a multiple flight set structure of two or more sets of flights.

Besides the above, it is possible to apply various design modifications within the scope of the matters described by the claims.

EXAMPLE

Although the present invention shall now be described further based on an example and a comparative example, the arrangement of the present invention is not restricted by this example and comparative example.

<Example 1>

Using the injection moulding machine 1 of FIG. 1, an ISO multipurpose test specimen type A (thickness: 4 mm; width of narrow portion: 10 mm) defined in the International Organization for Standardization Standards ISO 3167 was produced as a resin moulded article 7.

That is, the elongated roving 14 was supplied continuously as it is in the elongated state to the base resin 2 in the middle of being fed inside the cylinder 3 of the injection moulding machine 1 to prepare the fiber-reinforced resin 16 that was then made to fill the mould internal space of the mould 8 connected via the nozzle 6 to the tip portion of the cylinder 3 to produce the resin moulded article 7.

As the base resin 2, non-reinforced PA66 (LEONA (registered trademark) 1402S, made by Asahi Kasei Corporation) was used and as the roving 14, a roving formed by collecting together glass fibers by a sizing agent was used. The proportion of the glass fibers was set to 30 mass % of the total amount of the glass fibers and the base resin.

As the screw 10, that of the following structure was used.

(Plasticizing stage S1)

As shown in FIG. 2, one set of the flights 12 (width 3.3 mm) was formed at a fixed pitch width P1 (= 28 mm).

(First fiber kneading stage S2a)

As shown in FIG. 3(a), a multiple flight set structure was arranged by forming three sets of the first flights 12a to 12c (all of width: 3.3 mm) each at the fixed pitch width P2 (= 45 mm) and being shifted in the feeding direction F of the base resin by 1/3 of the pitch width P2 each such as to be at equal intervals in the feeding direction F. The depth of a single recessed groove 13 was 5.5 mm, the width was 11.7 mm, and the longitudinal cross-sectional area A2a of a space arranged by the single recessed groove 13 was 64.4 mm$^2$.

(Second fiber kneading stage S2b)

Of the same three sets of the first flights 12a to 12c as those of the first fiber kneading stage S2a, the one set of the first flights 12a was made to remain and the outer edges in the radial direction of the other two sets of the first flights 12b and 12c were ground and made into the second flights 12b' and 12c.

The clearance C2 of the second flights 12b' and 12c' was made 2 mm greater than the clearance C1 of the first flights 12a to 12c in the first fiber kneading stage S2a and the remaining one set of the first flights 12a in the second fiber kneading stage S2b.

Also, the diameter of the rotating shaft 11 was gradually thickened via a tapered portion to make the depth of the recessed groove 3.3 mm in a vicinity of the tip portion 19 facing the nozzle 6.

A width between the flights 12a of the remaining one set was 41.7 mm, the longitudinal cross-sectional area A2b of the space arranged between the flights 12a of the remaining one set was 206.3 mm$^2$ in the region of 5.5 mm depth following the first fiber kneading stage S2a and was 129.0 mm$^2$ in the vicinity of the tip portion 19.

<Comparative Example 1>

Besides using a conventional screw 10 with which the three sets of the first flights 12a to 12c of the second fiber kneading stage S2b are all unground and left to be of the same height and the three recessed grooves 13 are not connected, a resin moulded article 7 of the same shape and same dimensions was produced in the same manner as in Example 1.

The longitudinal cross-sectional area of each space arranged by each individual groove 13 was 64.4 mm$^2$ in the first fiber kneading stage S2a and in the following region of the second fiber kneading stage S2b of 5.5 mm depth and was 38.6 mm$^2$ in a region of 3.3 mm depth in the vicinity of the tip portion 19 facing the nozzle 6.

<Measurement of Fiber Length of Reinforced Fibers>

Number average fiber lengths (mm) of the reinforced fibers in the resin moulded articles produced in Example 1 and Comparative Example 1 were determined by the following method.

That is, after combusting each resin moulded article under an air atmosphere (nitrogen and oxygen atmosphere) using an ashing furnace, the glass fibers remaining as residue were extracted randomly, the fiber lengths were measured, and a number average value thereof was determined as the number average fiber length (mm).

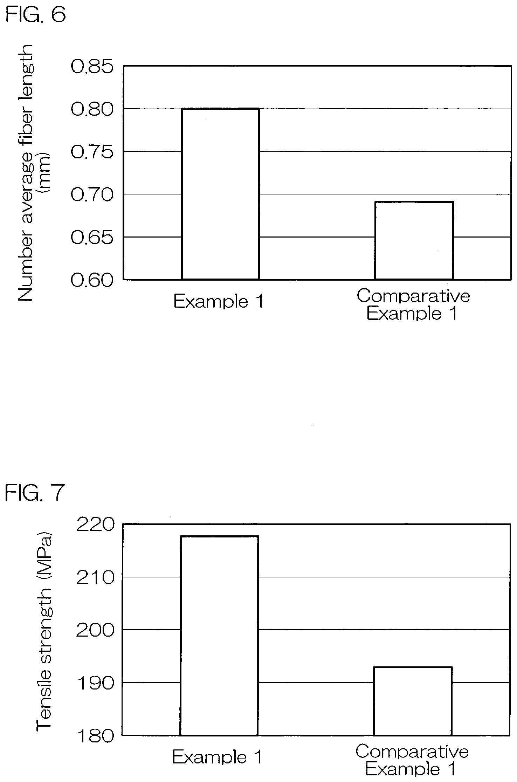

Consequently, it was found, as shown in FIG. 6, that by Example 1, it is possible to make the fiber length of the reinforcing fibers contained in the resin moulded article long in comparison to Comparative Example 1.

<Tensile Strength Measurement>

The tensile strengths of the resin moulded articles (ISO multipurpose test specimens type A) produced in each Example and Comparative Example were measured in accordance with the measurement method cited in International Organization for Standardization Standards ISO 527.

Consequently, it was found, as shown in FIG. 7, that by Example 1, it is possible to improve the tensile strength of the resin moulded article in comparison to Comparative Example 1.

The present application corresponds to Japanese Patent Application No. 2018-48309 filed on March 15, 2018 in the Japan Patent Office, and the entire disclosure of this application is incorporated herein by reference.

While preferred embodiments of the present invention have been described in detail above, these are merely specific examples used to clarify the technical content of the present invention, and the present invention should not be interpreted as being limited to these specific examples, and the scope of the present invention shall be limited only by the appended claims.

DESCRIPTION OF THE REFERENCE SIGNS

1: injection moulding machine, 2: base resin, 3: cylinder, 3a: inner peripheral surface, 5: resin supplying apparatus (resin supplying portion), 6: nozzle, 7: resin moulded article, 8: mould, 10: screw, 12: flight, 12, 12a, 12b, 12c: first flight, 12b', 12c': second flight, 13: recessed groove, 14: roving, 15: fiber supplying port (fiber supplying portion), 16: fiber-reinforced resin, 21: notch, C1, C2: clearance, D2a, D2b: depth, F: feeding direction, P2a, P2b: pitch width, S2: fiber kneading stage, S2a, first fiber kneading stage, S2b: second fiber kneading stage, X: axis

**Claims**

**1.** An injection moulding machine comprising:

a cylindrical cylinder that is provided at a base end side with a resin supplying portion supplied with a base resin, is provided at a tip portion with a nozzle injecting the base resin that has been plasticized, and has between the resin supplying portion and the tip portion a fiber supplying portion supplied continuously with an elongated roving constituted of reinforcing fibers;

a screw that is provided with flights of spiral shape on an outer periphery and is inserted inside the cylinder with a central axis being matched with an axis of the cylinder such as to be rotatable around the axis,

wherein the screw includes a fiber kneading stage at which while the base resin is fed in a feeding direction directed toward the tip portion from the base end side in conjunction with the rotation, the roving supplied from the fiber supplying portion is continuously drawn into the cylinder and kneaded with the base resin to prepare a fiber-reinforced resin,

the fiber kneading stage is provided with at least first flights as the flights that feed the base resin and the reinforcing fibers in the feeding direction in conjunction with the rotation of the screw while suppressing passage of the base resin and the reinforcing fibers, and

in the fiber kneading stage, a longitudinal cross-sectional area A2a (mm$^2$) of a space arranged between the first flights at an upstream side in the feeding direction of the base resin and a longitudinal cross-sectional area A2b (mm$^2$) of a space arranged between the first flights at a downstream side in the feeding direction satisfy formula (I) :

$$A2a < A2b \quad (I).$$

2. The injection moulding machine according to Claim 1, wherein in the fiber kneading stage, a region at the upstream side provided with two or more sets of the first flights is provided at the upstream side in the feeding direction and in a region further to the downstream side in the feeding direction than the region at the upstream side, one set of the first flights among the two or more sets of the first flights is made to remain by omission of the other first flights such that a longitudinal cross-sectional area A2b (mm$^2$) of a space arranged between the first flights of the remaining one set satisfies formula (I) with respect to a longitudinal cross-sectional area A2a (mm$^2$) of a space arranged between the mutually adjacent first flights of two or more sets in the region at the upstream side.

3. The injection moulding machine according to Claim 1 or 2, wherein in the fiber kneading stage, a region at the upstream side provided with two or more sets of the first flights is provided at the upstream side in the feeding direction and in a region further to the downstream side in the feeding direction than the region at the upstream side, one set of the first flights among the two or more sets of the first flights is made to remain and in place of the other first flights, second flights that are made greater in clearance with respect to an inner peripheral surface of the cylinder than the first flights of the remaining one set and allow passage of the base resin and the reinforcing fibers are provided in continuation to the other first flights such that a longitudinal cross-sectional area A2b (mm$^2$) of a space arranged between the first flights of the remaining one set satisfies formula (I) with respect to a longitudinal cross-sectional area A2a (mm$^2$) of a space arranged between the mutually adjacent first flights of two or more sets in the region at the upstream side.

4. The injection moulding machine according to any one of Claims 1 to 3, wherein in the fiber kneading stage, a region at the upstream side provided with two or more sets of the first flights is provided at the upstream side in the feeding direction and in a region further to the downstream side in the feeding direction than the region at the upstream side, one set of the first flights among the two or more sets of the first flights is made to remain and in place of the other first flights, second flights that are provided with notches connecting an upstream side and a downstream side in the feeding direction and allow passage of the base resin and the reinforcing fibers through the notches are provided in continuation to the other first flights such that a longitudinal cross-sectional area A2b (mm$^2$) of a space arranged between the first flights of the remaining one set satisfies formula (I) with respect to a longitudinal cross-sectional area A2a (mm$^2$) of a space arranged between the mutually adjacent first flights of two or more sets in the region at the upstream side.

5. The injection moulding machine according to any one of Claims 1 to 4, wherein at the downstream side in the feeding direction of the fiber kneading stage, a region at the downstream side that is greater in pitch width of the first flights than a region at the upstream side in the feeding direction is provided such that a longitudinal cross-sectional area A2b (mm$^2$) of a space arranged between the first flights in the region at the downstream side satisfies formula (I) with respect to a longitudinal cross-sectional area A2a (mm$^2$) of a space arranged between the first flights in the region at the upstream side.

6. The injection moulding machine according to any one of Claims 1 to 5, wherein at the downstream side in the feeding direction of the fiber kneading stage, a region at the downstream side in which a depth in a radial direction of a recessed groove arranged between the first flights is greater than that in a region at the upstream side in the feeding direction is provided such that a longitudinal cross-sectional area A2b (mm$^2$) of a space arranged between the first flights in the region at the downstream side satisfies formula (I) with respect to a longitudinal cross-sectional area A2a (mm$^2$) of a space arranged between the first flights in the region at the upstream side.

7. A resin moulded article production method being a method for producing a resin moulded article constituted of a fiber-reinforced resin containing a base resin and reinforcing fibers and comprising:

a step of supplying the base resin from the resin supplying portion to the cylinder of the injection moulding machine according to any one of Claims 1 to 6, heating and plasticizing the supplied base resin while feeding it in the feeding direction directed toward the tip portion in conjunction with the rotation of the screw, and continuously drawing the elongated roving supplied from the fiber supplying portion into the cylinder and kneading it with the base resin in conjunction with the rotation of the screw to prepare the fiber-reinforced resin; and

a step of filling a mould internal space of a mould connected to the cylinder via the nozzle with the prepared fiber-reinforced resin to mould the resin moulded article.

FIG. 1

FIG. 2

FIG. 3

# FIG. 4

FIG. 5

(a)

S2

S2b          S2a

F

19    P2b    13    11    12    P2a    18    20

(b)

S2

S2b          S2a

F

19    13    11    12    18    20

13    D2b    13    D2a

13    12    13    12

FIG. 6

FIG. 7

## INTERNATIONAL SEARCH REPORT

| International application No. |
| --- |
| PCT/JP2019/008629 |

**A. CLASSIFICATION OF SUBJECT MATTER**
Int.Cl. B29C45/60(2006.01)i, B29C45/50(2006.01)i

According to International Patent Classification (IPC) or to both national classification and IPC

**B. FIELDS SEARCHED**

Minimum documentation searched (classification system followed by classification symbols)
Int.Cl. B29C45/60, B29C45/50

| Documentation searched other than minimum documentation to the extent that such documents are included in the fields searched | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2015/189869 A1 (MITSUBISHI HEAVY INDUSTRIES PLASTIC TECHNOLOGY CO., LTD.) 17 December 2015, paragraphs [0014]-[0060], fig. 1-7 & US 2017/0001353 A1, paragraphs [0034]-[0124], fig. 1-7 & EP 3098052 A1 & CN 105934320 A | 1-7 |
| A | JP 2014-117811 A (MITSUBISHI HEAVY INDUSTRIES PLASTIC TECHNOLOGY CO., LTD.) 30 June 2014, paragraphs [0016]-[0030], fig. 1-6 (Family: none) | 1-7 |
| A | JP 2017-039243 A (AISIN SEIKI CO., LTD.) 23 February 2017, paragraphs [0015]-[0035], fig. 1 & US 2017/0050359 A1, paragraphs [0018]-[0044], fig. 1 | 1-7 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 May 2019 (30.05.2019) | 11 June 2019 (11.06.2019) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/008629

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-224801 A (TOYO MACHINERY & METAL CO., LTD.) 10 November 2011, paragraphs [0016]-[0027], fig. 1-3 (Family: none) | 1-7 |
| A | JP 2017-105184 A (TOYO MACHINERY & METAL CO., LTD.) 15 June 2017, paragraphs [0008]-[0070], fig. 1-8 & EP 3385053 A1, paragraphs [0009]-[0076], fig. 1-8 & CN 108602224 A | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014166712 A

- JP 2018048309 A